# EUROPÄISCHE PATENTANMELDUNG

(11) **EP 2 759 624 A1**
(43) Veröffentlichungstag der Anmeldung: **30.07.2014**
(21) Anmeldenummer: 13153000.8
(22) Anmeldetag: 29.01.2013
(51) Int. Cl.: D02G 3/48, B60C 9/00

(54) **Verstärkungslage für Gegenstände aus elastomerem Material, vorzugsweise für Fahrzeugluftreifen und Fahrzeugluftreifen**

(71) Anmelder: Continental Reifen Deutschland GmbH, 30165 Hannover (DE)
(72) Erfinder: Justine, Carole, 31535 Scharrel (DE); Krüger, Jörn, 66111 Saarbrücken (DE); Wahl, Günter, 31249 Hohenhameln (DE); Kramer, Thomas, 32049 Herford (DE)

(57) **Zusammenfassung**

Verstärkungslage für einen Fahrzeugreifen, wobei die Verstärkungslage eine Vielzahl an parallelen und in Gummi eingebetteten Festigkeitsträgern aufweist, wobei jeder Festigkeitsträger aus wenigstens einem verdrehten Multifilamentgarn besteht und wobei dieses Multifilamentgarn einen Garntiter kleiner 1100 dtex bzw. kleiner 1000 denier aufweist und aus Viskose besteht, welches im Normklima konditioniert wurde und eine Bruchfestigkeit von ≥ 45 cN/tex aufweist; insbesondere handelt es sich bei dem Viskosegarn um ein Rayongarn oder ein Lyocellgarn

## Beschreibung

Die Erfindung betrifft eine gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger aus wenigstens einem verdrehten Multifilamentgarn besteht und wobei dieses Multifilamentgarn einen Garntiter < 1100 dtex aufweist. Die Erfindung betrifft ferner einen Fahrzeugluftreifen, enthaltend diese Verstärkungslage.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomeres Material eingebettet. Die Festigkeitsträger dieser Verstärkungslagen weisen beispielsweise die Form von Geweben oder kalandrierten, endlos gespulten Festigkeitsträgern auf.

Die gummierten Verstärkungslagen geeigneter Größe und Ausbildung werden mit weiteren Bauteilen zusammengefügt, um ein technisches Gummiprodukt oder einen Fahrzeugluftreifen zu bilden. Dabei verstärken die gummierten Verstärkungslagen das betreffende Produkt.

Eine vorgenannte Verstärkungslage ist beispielsweise aus der EP 0 908 329 B 1 bekannt geworden. Die Verstärkungslage weist Textil-Korde aus synthetischen Multifilamentgarnen aus PET oder PEN auf. Die Textil-Korde sind aufgrund des verwendeten Garntiters und ihrer Konstruktion vergleichsweise dünn ausgelegt, so dass die gummierte Verstärkungslage eine vergleichsweise geringe Lagendicke aufweist. Dieses hat einerseits den Vorteil, dass weniger Kautschukmaterial zum Gummieren dieser Festigkeitsträger eingesetzt werden muss, wodurch Materialkosten eingespart werden. Andererseits hat eine dünne gummierte Verstärkungslage im Produkt, beispielsweise im Fahrzeugreifen, den Vorteil, dass das Gewicht des Reifens verringert ist sowie eine geringere Hysterese bewirkt, was sich positiv auf den Rollwiderstand des Reifens auswirkt.

Jedoch ist man hinsichtlich des Schutzes der Umwelt bestrebt, natürliche, nachwachsende Rohstoffe zu verwenden, dieses auch in technischen Gummiprodukten und Fahrzeug(luft)reifen.

Es ist daher die Aufgabe der Erfindung, eine alternative Verstärkungslage für Gegenstände aus elastomerem Material bereitzustellen, welche umweltfreundlich gestaltet ist und deren physikalische Eigenschaften in etwa gleich zu bisher verwendeten Verstärkungslagen mit synthetischen Festigkeitsträgern sind. Es ist ferner die Aufgabe der Erfindung, einen Fahrzeugluftreifen bereitzustellen, der umweltfreundlich gestaltet ist und einen vergleichsweise geringen Rollwiderstand aufweist.

Die Aufgabe wird in Bezug auf die Verstärkungslage dadurch gelöst, dass das Multifilamentgarn des Festigkeitsträgers aus Viskose besteht, welches im Normklima gemäß DIN EN ISO 139-1:2005 konditioniert wurde und dass das Multifilamentgarn eine Bruchfestigkeit von ≥ 45 cN/tex aufweist.

Es ist eine alternative Verstärkungslage geschaffen, deren Festigkeitsträger ein Viskose-Multifilamentgarn aufweist. Viskose-Multifilamentgarne sind mit dem sog. "Viskose-Verfahren" aus Cellulose erhaltbar. Cellulose ist das weltweit häufigste und bedeutsamste natürliche, nachwachsende und somit umweltfreundliche Polymer. Bisher mussten dicke Festigkeitsträger aus Viskose- bzw. Rayon-Multifilamentgarn mit einem Garntiter > 1840 dtex in gummierten Verstärkungslagen im Reifen eingesetzt werden, um die für den Einsatz notwendige Bruchfestigkeit zu erhalten. Es ist nun aufgrund eines modifizierten Herstellverfahrens des Viskose-Garnes ermöglicht, ein dünnes Viskose-Multifilamentgarn mit einer für Viskose überraschend hohen Bruchfestigkeit von ≥ 45 cN/tex herzustellen. Überraschenderweise eignet sich eine Verstärkungslage mit Festigkeitsträgern aus Viskose-Multifilamentgarn mit einem Garntiter < 1100 dtex hervorragend für die Verwendung in technischen Gummiprodukten, insbesondere in Fahrzeug(luft)reifen. Die erfindungsgemäße Verstärkungslage erfüllt insbesondere in Bezug auf Bruchkraft, E-Modul, Ermüdungsbeständigkeit und Bruchdehnung die Anforderungen für den Einsatz insbesondere im Fahrzeugreifen.

Die Messung der konditionierten textilen Daten des Viskose-Multifilamentgarns erfolgt gemäß DIN EN ISO 2062:2009 unter folgenden Bedingungen:
● Konditionierungszeiten von ≥ 16 h im Normalklima
● CRE [constant rate of extension = konstante Dehngeschwindigkeit]-Zugprüfmaschine mit pneumatischen Klemmen
● Prüfung von Multifilamentgarnen mit Schutzdrall 100 t/m (t/m = turns/m = Umdrehungen pro Meter)
● Einspannlänge der Prüfstücke: 500 mm
● Zuggeschwindigkeit (Traversengeschwindigkeit): 500 mm/min (100 %/min)

Die in den vorstehend genannten Normen erwähnten Konditionierungs- und Prüfbedingungen sind vergleichbar mit der einschlägigen Norm der Chemiefaserindustrie (BISFA "Testing methods for viscose, cupro, acetate, triacetate and lyocell filament yarns", 2007 Edition).

Das Viskose-Multifilamentgarn wird überraschenderweise dadurch erhalten, dass das in Beispiel 2 der GB 685,631 beschriebene Verfahren hinsichtlich mehrerer technischer Merkmale abgeändert wird, die im Folgenden beschrieben werden.
● Anstelle von Baumwoll-Linters wurden Zellstoffe aus Nadelholz eingesetzt.
● Es werden vor dem Spinnprozess Viskose-Modifikatoren (z.B. Aminethoxylate wie ethoxylierte Fettsäureamine oder Polyethylenglykole wie PEG 1500) in einer Konzentration im Bereich von 0,01 bis 1,0 Gew.-% bezogen auf Viskose zugesetzt.
● Es werden Spinndüsen mit Lochdurchmesser < 100 µm verwendet, vorzugsweise mit einem Lochdurchmesser im Bereich von 40 bis 80 µm.
● Die Spinngeschwindigkeit an der ersten Aufnahmerolle beträgt weniger als 50 m/min und liegt vorzugsweise im Bereich von 10 bis 40 m/min.
● Der Transport des Fadens aus der Spinndüse in das Koagulationsbad erfolgt durch ein Spinnrohr, wobei der Transport des Fadens im Spinnrohr durch eine Strömung des Koagulationsbads in Richtung des Faserabzugs unterstützt wird.
● Die Schwefelsäurekonzentration im Koagulationsbad ist größer als 15 g/Liter und liegt vorzugsweise im Bereich von 20 bis 120 g/Liter.
● Dem Koagulationsbad werden Natriumsulfat und Zinksulfat zugesetzt, vorzugsweise in einer Konzentration von 25 bis 250 g/LiterKoagulationsbad.
● Die Temperatur des Koagulationsbads beträgt mehr als 30 °C und liegt vorzugsweise im Bereich von 40 bis 95 °C.
● Das nachgelagerte Fixierbad enthält Schwefelsäure, vorzugsweise in einer Konzentration im Bereich von 20 bis 120 g/LiterFixierbad und dient auch als Zersetzungsbad für Cellulosexanthogenat.
● Das ersponnene Garn wird stärker als auf 175 % verstreckt, vorzugsweise liegt die Verstreckung in einem Bereich von 180 bis 220 %.
● Das erfindungsgemäße Viskose-Multifilamentgarn wird vorzugsweise in einem Zweistufenprozess hergestellt, wobei in der ersten Stufe das Garn ersponnen und aufgewickelt und in der zweiten Stufen das aufgewickelte Garn abgewickelt und verstreckt wird.

Das Viskose-Multifilamentgarn wird zu einem zum Kalandrieren einsatzfähigen Gewebe konvertiert, indem man die dem Fachmann bekannten Schritte:
- der Verdrehung der/des Multifilamentgarne/s zur erwünschten Festigkeitsträgerkonstruktion
- des Herstellens eines Gewebe, enthaltend den erwünschten Festigkeitsträger
- der Gummi-Haftungsaktivierung des Gewebes, beispielsweise mittels eines RFLdips
durchführt.

Vorteilhaft ist es, wenn das Viskose-Multifilamentgarn einen Garntiter im Bereich von ≥ 150 dtex bis < 1100 dtex und eine Bruchfestigkeit im Bereich von ≥ 45 cN/tex bis ≤ 60 cN/tex aufweist. Die hohe Bruchfestigkeit pro dtex erlaubt in Bezug auf die Bruchkraft einen dünnen Garntiter.

Zweckmäßig ist es, wenn das Viskose-Multifilamentgarn einen Garntiter im Bereich von ≥ 170 dtex bis < 900 dtex, vorzugsweise von ≥ 200 dtex bis < 800 dtex und eine Bruchfestigkeit im Bereich von ≥ 45 cN/tex bis ≤ 56 cN/tex, vorzugsweise von ≥ 45 cN/tex bis ≤ 53 cN/tex aufweist. Hierdurch werden Vorteile in Bezug auf die Ermüdungseigenschaften eines Fahrzeugluftreifens, der die erfindungsgemäße Verstärkungslage als Karkasslage einsetzt, sowie in Bezug auf die Prozessfähigkeit der Verstärkungslagenherstellung erzielt.

Vorteilhaft in Bezug auf die Ermüdungsbeständigkeit eines Fahrzeugluftreifens, der die erfindungsgemäße Verstärkungslage als Karkasslage einsetzt, ist es, wenn das Viskose-Multifilamentgarn einen Filament-Titer im Bereich von 1,2 und 4,0 dtex, vorzugsweise von 2,4 und 3,0 dtex aufweist.

Zweckmäßig ist es, wenn das Viskose-Multifilamentgarn eine Bruchdehnung im Bereich von ≥ 5 % und ≤ 20 %, vorzugsweise von ≥ 6 % und ≤ 15 % aufweist. Ein Fahrzeugluftreifen mit einer derartigen Verstärkungslage als Karkasslage ist ermüdungsbeständiger, auch bei extremen Bedingungen wie Bordsteinkontakten.

Das Viskose-Multifilamentgarn ist ein Rayon-Multifilamentgarn oder ein Lyocell-Multifilamentgarn.

Vorteilhaft ist es, wenn der Festigkeitsträger ein aus wenigstens zwei miteinander verdrehten Viskose-Multifilamentgarnen bestehender Textil-Kord ist, welcher vorzugsweise in einer Dichte von 120 epdm bis 280 epdm in der Verstärkungslage angeordnet ist.

"epdm" bedeutet ends per decimeter und beschreibt die Korddichte in der Verstärkungslage.

Zweckmäßig ist es, wenn die Viskose-Multifilamentgarne eine Verdrehung von 250 tpm bis 650 tpm aufweisen und wenn der Textil-Kord eine Endverdrehung von 350 tpm bis 650 tpm aufweist. Die Multifilamentgarne können dabei S-/ oder Z-verdreht sein, während die Endverdrehung entgegengesetzt zur Multifilamentgarn-Verdrehung ist.

Als besonders geeignet haben sich Verstärkungslagen mit Textil-Korden aus Viskose-Multifilamentgarn der Konstruktion 620 x 2 in einer Dichte von 190 epdm oder der Konstruktion 780 x 2 in einer Dichte von 160 epdm, jeweils mit einem Filament-Titer zwischen 1,2 und 4,0 dtex, bevorzugt zwischen 2,4 und 3,0 dtex erwiesen. Die Textil-Korde sind sehr dünn und weisen eine sehr hohe Ermüdungsbeständigkeit auf.

Abgesehen davon unterliegt die Art oder Aufmachung der cellulosischen Fasern keinen Beschränkungen. So kann das Viskose-Multifilamentgarn als solches oder als Faserkurzschnitt zu einem Festigkeitsträger, zu einem Gewebe oder Gewirke verarbeitet sein. Auch ist es möglich, den das Viskose-Multifilamentgarn enthaltenden Festigkeitsträger direkt zur Herstellung eines Reifens einzusetzen.

Die Erfindung wird in Bezug auf den Fahrzeugluftreifen gelöst, indem dieser eine vorbeschriebene gummierte Verstärkungslage aufweist.

Hierbei ist die Verstärkungslage insbesondere eine Karkasse und/oder eine Gürtelbandage und/oder ein Wulstverstärker.

In einem bevorzugten Ausführungsbeispiel der Erfindung wird die Verstärkungslage als Karkasslage für PKW-Luftreifen eingesetzt. Die Verstärkungslage ist ein gummiertes Gewebe, welche als Festigkeitsträger Textil-Korde aus zwei miteinander verdrehten Rayon-Multifilamentgarnen der Konstruktion 620 x 2 in einer Dichte von 190 epdm aufweist. Die Multifilamentgarne weisen jeweils eine Verdrehung von 600 tpm und der betreffende Textil-Kord eine Endverdrehung in entgegengesetztem Drehsinn von 600 tpm auf. Die Filamente eines jeden Garnes weisen einen Filament-Titer von 2,4 dtex auf. Die Bruchfestigkeit eines Rayon-Multifilamentgarnes liegt im Bereich von ≥ 45 cN/tex bis < 53 cN/tex. Jedes Rayon-Multifilamentgarn weist eine Bruchdehnung im Bereich von ≥ 6 % und ≤ 15 % auf. Jeder Rayon-Kord weist einen Durchmesser von 0,42 mm auf, woraus sich eine Dicke der gummierten Verstärkungslage von 0,7 mm ergibt.

In einem anderen bevorzugten Ausführungsbeispiel der Erfindung wird die Verstärkungslage ebenfalls als Karkasslage für PKW-Luftreifen eingesetzt. Die Verstärkungslage ist ein gummiertes Gewebe, welches als Festigkeitsträger Textil-Korde aus Rayon der Konstruktion 780 x 2 in einer Dichte von 160 epdm aufweist. Die Multifilamentgarne weisen jeweils eine Verdrehung von 550 tpm und der betreffende Textil-Kord eine Endverdrehung in entgegengesetztem Drehsinn von 550 tpm auf. Die Filamente eines jeden Garnes weisen einen Filament-Titer von 3,0 dtex auf. Die Bruchfestigkeit eines Rayon-Multifilamentgarnes liegt im Bereich von ≥ 45 cN/tex bis < 53 cN/tex. Jedes Rayon-Multifilamentgarn weist eine Bruchdehnung im Bereich von ≥ 6 % und ≤ 15 % auf. Jeder Rayon-Kord weist einen Durchmesser von 0,47 mm auf, woraus sich eine Dicke der gummierten Verstärkungslage von 0,75 mm ergibt.

Die nachfolgende Tabelle 1 gibt eine beispielhafte Übersicht über die Parameter von Rayon-Textil-Korden bestimmter Konstruktion.

**Tab. 1**

| **Biespiel/Parameter** | **1** | **2** | **3** |
|---|---|---|---|
| Material | Rayon | Rayon | Rayon |
| Kordkonstruktion | 1840x2 | 620x2 | 780x2 |
| Garntiter [dtex] (kond*) | 1840 | 620 | 780 |
| Filament-Zahl | 1000 | 240 | 300 |
| Bruchkraft [N] | 180 | 66 | 87 |
| Bruchdehnung [%] | 10,8 | 10 | 11 |
| Drehungen [Tpm] | 420 | 600 | 550 |
| Durchmesser [mm] | 0,72 | 0,41 | 0,45 |

"kond*" bedeutet konditioniert gemäß DIN EN ISO 2062:2009 unter den vorstehend beschriebenen Bedingungen.

Das nachfolgende Diagramm 1 zeigt Kraft-Dehnungskurven der in Tabelle 1 beschriebenen Rayon-Textil-Korde.

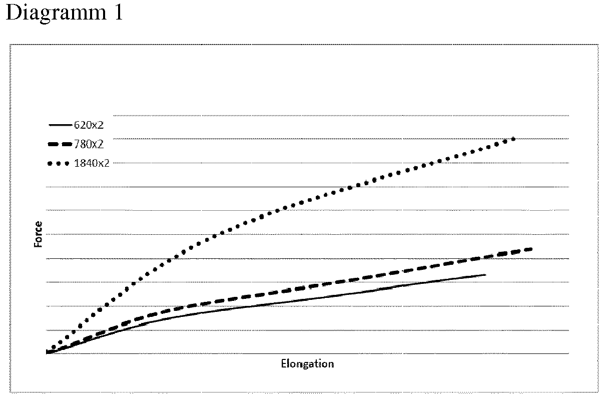

Das nachfolgende Diagramm 2 zeigt Kraft-Dehnungskurven von drei ungummierten Geweben in N/dm, wobei jedes Gewebe einen der in Tabelle 1 beschriebenen Textil-Korde aufweist. "e" steht in der Legende für epdm.

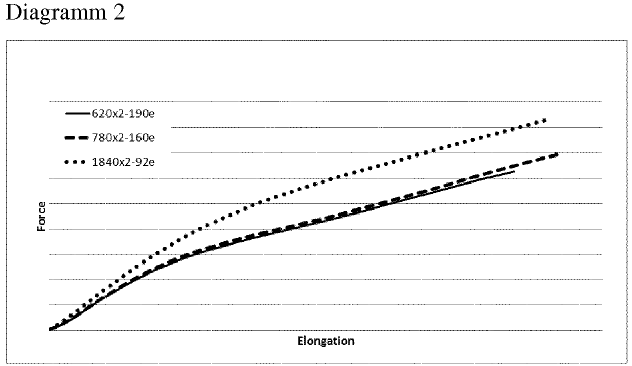

Die Kraft-Dehnungs-Messungen sind in Anlehnung an die ASTM D885 durchgeführt.

Die nachfolgende Tabelle 2 gibt eine beispielhafte Übersicht über einen PKW-Luftreifen, welcher als Karkasse ein Gewebe mit PET-Textil-Korden oder mit Rayon-Textil-Korden bestimmter Konstruktion und bestimmter epdm aufweist sowie den erhaltenen Rollwiderstand des Reifens.

**Tab. 2**

| **Biespiel/Parameter** | **1** | **2** | **3** | **4** | **5** |
|---|---|---|---|---|---|
| Material | PET | PET | Rayon | Rayon | Rayon |
| Konstruktion | 1440x2 | 550x2 | 1840x2 | 780x2 | 620x2 |
| Korddichte [epdm] | 121 | 170 | 92 | 160 | 190 |
| Rollwiderstand [%] | 100,0 | 102,9 | 99,3 | 101,0 | 100,7 |

Ein Rollwiderstand von 100% entspricht der Referenz. Rollwiderstände > 100% zeigen einen erniedrigten (verbesserten) Rollwiderstand an, während Rollwiderstände < 100% einen erhöhten (verschlechterten) Rollwiderstand anzeigen.

Es ist ersichtlich, dass dünne Korde aus PET-Multfilamentgarnen und aus Rayon-Multifilamentgamen trotz höherer Korddichte einen verbesserten Rollwiderstand aufweisen. Rayon-Multifilamentkorde sind umweltfreundlicher als PET-Multifilamentkorde, da Viskose aus nachwachsenden Rohstoffen erhältlich ist.

## Patentansprüche

1. Gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger aus wenigstens einem verdrehten Multifilamentgarn besteht und wobei dieses Multifilamentgarn einen Garntiter < 1100 dtex aufweist,
**dadurch gekennzeichnet,**
**dass** das Multifilamentgarn aus Viskose besteht, welches im Normklima gemäß DIN EN ISO 139-1:2005 konditioniert wurde und dass das Multifilamentgarn eine Bruchfestigkeit von ≥ 45 cN/tex aufweist.

2. Verstärkungslage nach Anspruch 1, **dadurch gekennzeichnet, dass** das Viskose-Multifilamentgarn einen Garntiter im Bereich von ≥ 150 dtex bis < 1100 dtex und eine Bruchfestigkeit im Bereich von ≥ 45 cN/tex bis ≤ 60 cN/tex aufweist.

3. Verstärkungslage gemäß Anspruch 2, **dadurch gekennzeichnet, dass** das Viskose-Multifilamentgarn einen Garntiter im Bereich von
≥ 170 dtex bis < 900 dtex, vorzugsweise von ≥ 200 dtex bis < 800 dtex und eine Bruchfestigkeit im Bereich von ≥ 45 cN/tex bis ≤ 56 cN/tex, vorzugsweise von ≥ 45 cN/tex bis ≤ 53 cN/tex aufweist.

4. Verstärkungslage nach einem oder mehreren der Ansprüche 1 bis 3, **dadurch gekennzeichnet, dass** das Viskose-Multifilamentgarn einen Filament-Titer im Bereich von 1,2 und 4,0 dtex, vorzugsweise von 2,4 und 3,0 dtex aufweist.

5. Verstärkungslage gemäß einem oder mehreren der Ansprüche 1 bis 4, **dadurch gekennzeichnet, dass** das Viskose-Multifilamentgarn eine Bruchdehnung im Bereich von ≥ 5 % und ≤ 20 %, vorzugsweise von ≥ 6 % und < 15 % aufweist.

6. Verstärkungslage gemäß einem oder mehreren der vorangehenden Ansprüche, **dadurch gekennzeichnet, dass** der Festigkeitsträger ein aus wenigstens zwei miteinander verdrehten Multifilamentgarnen bestehender Textil-Kord ist und dass die Festigkeitsträger in einer Dichte von 120 epdm bis 280 epdm in dieser Verstärkungslage angeordnet sind.

7. Verstärkungslage gemäß Anspruch 6, **dadurch gekennzeichnet, dass** die Multifilamentgarne eine Verdrehung von 250 tpm bis 650 tpm aufweisen und dass der Textil-Kord eine Endverdrehung von 350 tpm bis 650 tpm aufweist.

8. Verstärkungslage nach einem oder mehreren der Ansprüche 6 bis 7, **dadurch gekennzeichnet, dass** der Textil-Kord die Konstruktion 620 x 2 oder die Konstruktion 780 x 2 aufweist, wobei beide Garne aus Viskose bestehen.

9. Verstärkungslage nach einem oder mehreren der Ansprüche 6 bis 7, **dadurch gekennzeichnet, dass** der Textil-Kord asymmetrisch ist und Multifilamentgarne unterschiedlichen Garn-Titers aufweist und vorzugsweise die Konstruktion 620 x 1 / 780 x 1 [600 tpm / 550 tpm] aufweist, wobei der Kord gegensinnig zur Garndrehrichtung endverdreht ist.

10. Fahrzeugluftreifen, welcher mindestens eine Verstärkungslage nach einem oder nach mehreren der vorangehenden Ansprüche aufweist.

11. Fahrzeugluftreifen nach Anspruch 10, **dadurch gekennzeichnet, dass** die Verstärkungslage eine Karkasse und/oder eine Gürtelbandage und/oder ein Wulstverstärker ist.
